# EUROPEAN PATENT SPECIFICATION

(11) **EP 4 737 736 B1**
(45) Date of publication and mention of the grant of the patent: **11.11.2026**
(21) Application number: 25205180.0
(22) Date of filing: 29.09.2025
(51) Int. Cl.: F04D 27/00, B64D 13/02, F01D 1/30, F01D 17/14, F01D 17/16, F02C 6/08, F02C 7/277, F04D 29/44, F04D 29/46, F04D 29/50

(54) **A BLOWER COMPRESSOR ASSEMBLY**
GEBLÄSEVERDICHTERANORDNUNG
ENSEMBLE COMPRESSEUR DE SOUFFLANTE

(30) Priority: 29.10.2024 GB 202415885
(43) Date of publication of application: 06.05.2026
(73) Proprietor: Rolls-Royce plc, London N1 9FX (GB)
(72) Inventor: Murray, Christopher A, Derby, DE24 8BJ (GB)
(74) Representative: Rolls-Royce plc

(56) References cited:
- EP-A1- 4 198 267
- GB-A- 2 624 170
- US-A1- 2003 010 029
- US-B1- 6 435 167

## Description

### TECHNICAL FIELD

The present disclosure relates to a blower compressor assembly for an aircraft.

The present disclosure also concerns a gas turbine engine assembly and an aircraft comprising the blower compressor assembly.

### BACKGROUND

It is known to pressurise a cabin of an aircraft using an air pressurisation system which makes use of engine bleed air which is bled from a compressor section of the core of a gas turbine engine. Bleeding high pressure air from the gas turbine engine reduces its efficiency and thereby increases its fuel consumption.

It is therefore desirable to provide an improved air pressurisation system. Air pressurisation systems which make use of air which is taken from a lower pressure source of a gas turbine engine, such as a bypass duct, and which subsequently compress the air prior to delivering it to the cabin are also known. Some exemplary air pressurisation systems are described in EP3517436 A1, EP3517437 A1 and EP3517438 A1.

EP4198267 A1 discloses a blower assembly comprising a flow modifier configured to move between a compressor configuration and a turbine configuration.

### SUMMARY

According to an aspect of the present disclosure, there is provided a blower compressor assembly comprising: a flow modifier comprising an array, e.g. a circumferential array, of nozzle guide vanes and an array, e.g. a circumferential array, of diffuser vanes, wherein the flow modifier is movable relative to a rotor between a turbine configuration, in which the array of nozzle guide vanes is arranged about the rotor in fluidic communication with one or more flow channels through the rotor, and a compressor configuration, in which the array of diffuser vanes is arranged about the rotor in fluidic communication with the flow channels through the rotor; and an actuator assembly for moving the flow modifier relative to the rotor between the turbine configuration and the compressor configuration, wherein the actuator assembly comprises: a first actuator comprising a first chamber, a first valve configured to selectively supply pressurised air from a pressurised air source to the first chamber or vent pressurised air from the first chamber, and a piston arranged to one side of the first chamber and coupled to the flow modifier such that the flow modifier is moved into the turbine configuration or the compressor configuration based on the pressure of air within the first chamber; and a second actuator, configured to controllably adjust the position of the piston when the blower compressor is in the compressor configuration, in order to adjust a flow area of the diffuser vane array in fluidic communication with the flow channels through the rotor.

The array of diffuser vanes may be spaced apart from the array of nozzle guide vanes in an axial direction of the blower compressor assembly, e.g. of the rotor.

The blower compressor assembly may further comprise the rotor defining the one or more flow channels therethrough.

The second actuator may comprise a second chamber, provided on an opposite side of the piston from the first chamber, and a second valve configured to controllably supply pressurised air to the second chamber in order to adjust the position of the piston. For example, the actuator assembly may comprise a cylinder and the piston may be arranged within the cylinder. The first chamber may comprise a portion of the cylinder to one side of the piston and the second chamber may comprise a portion of the cylinder on an opposite side of the piston from the first chamber.

The second valve may be a variable pressure valve configured to controllably modulate the pressure of air supplied to the second chamber, e.g. in order to selectively vary a flow area of the diffuser vane array in fluidic communication with the flow channels through the rotor.

The second valve may be arranged to receive a supply of pressurised air from an outlet of the blower compressor to selectively supply to the second chamber.

The second actuator may comprise an electro-mechanical actuator coupled to the piston and configured to controllably adjust the position of the piston, e.g. in order to selectively vary a flow area of the diffuser vane array in fluidic communication with the flow channels through the rotor.

The electro-mechanical actuator may be configured to be driven by the piston to enable the vane array to move into the turbine configuration when pressurised air is supplied to the first chamber.

The first valve may comprise a 2-way valve configured to either supply pressurised air to the first chamber or vent the first chamber. In other words, the first valve may be configured to the selectively (and alternatingly) perform one of: supply pressurised air to the first chamber and vent the first chamber.

The first valve may be configured to vent air from the first chamber when the blower compressor assembly is in the compressor configuration.

The flow modifier may be biased towards the compressor configuration. For example, the actuator assembly may further comprise a first resilient member configured to bias the flow modifier into the compressor configuration.

The first actuator may be configured to move the flow modifier into the turbine configuration when pressurised air is supplied to the first chamber.

The flow modifier may comprise a movable plate. The movable plate may be movable relative to the array of diffuser vanes in order to adjust a flow area through the diffuser. The movable plate may be coupled to the piston. The flow area though the diffuser may thereby selectively varied by the second actuator.

The piston may be biased to move towards a position in which a flow area through the diffuser vane array is at a maximum. For example, the actuator assembly may further comprise a second resilient member configured to urge the piston to move towards the position in which the flow area through the diffuser is at a maximum. A bias force configured to bias the piston to move towards the position in which a flow area through the diffuser is at a maximum may be less than a bias force configured to move the flow modifier into the compressor configuration. For example, a spring constant of the first resilient element may be greater than a spring constant of the second resilient element.

According to another aspect of the present disclosure, there is provided an actuator assembly for the blower compressor assembly of any of the preceding claims, the actuator assembly for moving the flow modifier relative to the rotor between the turbine configuration and the compressor configuration, wherein the actuator assembly comprises: a first actuator comprising a first chamber, a first valve configured to selectively supply pressurised air from a pressurised air source to the first chamber or vent pressurised air from the first chamber, and a piston arranged to one side of the first chamber and coupled to the flow modifier such that the flow modifier is moved into the turbine configuration or the diffuser configuration based on the pressure of air within the first chamber; and a second actuator, configured to controllably adjust the position of the piston when the blower-compressor is in the compressor configuration, in order to adjust a flow area of the diffuser vane array in fluidic communication with the flow channels through the rotor.

A gas turbine engine for an aircraft may comprise the above-mentioned blower compressor assembly or the above-mentioned actuator assembly.

The gas turbine engine may further comprise an accessory gear box for coupling the first input to the spool of the gas turbine engine.

The gas turbine engine may further comprise: an engine core comprising a turbine, a compressor, and a core shaft connecting the turbine to the compressor; a fan located upstream of the engine core, the fan comprising a plurality of fan blades; and a gearbox that receives an input from the core shaft and outputs drive to the fan so as to drive the fan at a lower rotational speed than the core shaft.

The turbine may be a first turbine. The compressor may be a first compressor. The core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

An aircraft may comprise the above-mentioned blower compressor assembly, the above-mentioned actuator assembly or the above-mentioned gas turbine engine.

The aircraft may further comprise the pressurised air source.

An aircraft may comprise an airframe, a gas turbine engine and the above mentioned blower compressor assembly. The blower compressor may be located within the gas turbine engine.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

According to an aspect, there is provided an aircraft comprising a cabin blower system or a gas turbine engine as described and/or claimed herein.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### BRIEF DESCRIPTION OF THE DRAWINGS

Embodiments will now be described by way of example only with reference to the accompanying drawings, which are purely schematic and not to scale, and in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figure 4 is a schematic view of a blower system, according to arrangements of the present disclosure;
Figures 5A and 5B are schematic front views of a blower compressor assembly for the blower system in compressor and turbine configurations respectively;
Figures 6A and 6B are schematic views of the blower compressor assembly in the turbine configuration and compressor configuration respectively;
Figure 6c is a schematic view of the blower compressor assembly in the compressor configuration, with an effective flow area of the diffuser vanes being controllably reduced; and
Figure 7 is a schematic view of a blow assembly according to another arrangement of the present disclosure.

### DETAILED DESCRIPTION

### Figure 1

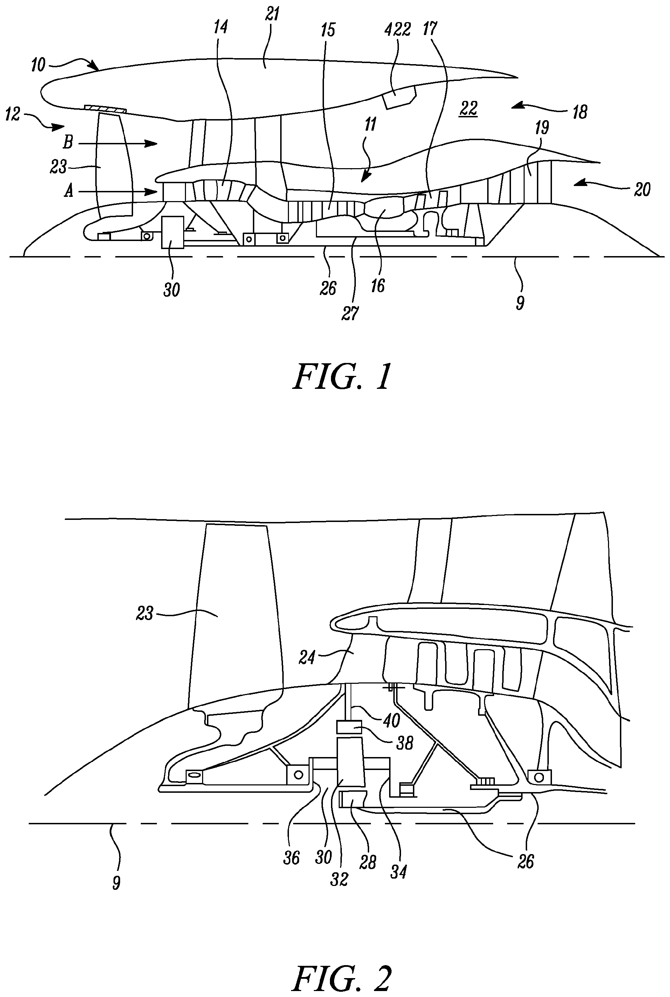

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a first, low pressure shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The combustion equipment 16 may be referred to as the combustor 16, with the terms "combustion equipment 16" and "combustor 16" used interchangeably herein. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting second, high pressure shaft 27. The fan 23 generally acts to impart increased pressure to the bypass airflow B flowing through the bypass duct 22, such that the bypass airflow B is exhausted through the bypass exhaust nozzle 18 to generally provide the majority of the propulsive thrust. The epicyclic gearbox 30 is a reduction gearbox.

### Figure 2

An exemplary arrangement for a geared fan gas turbine engine 10 is shown in Figure 2. The low pressure turbine 19 (see Figure 1) drives the low pressure shaft 26, which is coupled to a sun wheel, or sun gear, 28 of the epicyclic gearbox 30. The low pressure shaft 26 may be referred to as an input shaft for the epicyclic gearbox 30. Radially outward of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 through an output fan shaft 42 in order to drive the fan 23 in rotation about the engine axis 9. Radially outward of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the output fan shaft 42 that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

### Figure 3

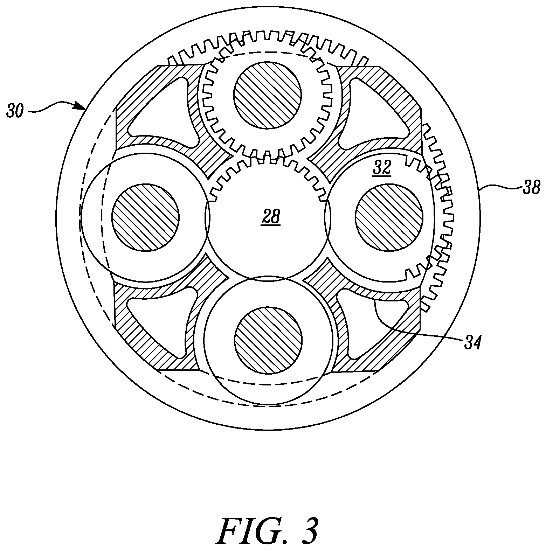

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32, for example five planet gears 32.

The epicyclic gearbox 30 illustrated by way of example in Figures 2 and 3 is of the planetary type, in that the planet carrier 34 is coupled to the output fan shaft 42 via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output fan shaft 42 and the stationary supporting structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle (the bypass exhaust nozzle 18) that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the principal rotational axis 9), a radial direction (in the bottom-to-top direction in Figure 1), and a circumferential direction (perpendicular to the page in the Figure 1 view). The axial, radial and circumferential directions are mutually perpendicular.

### Figure 4

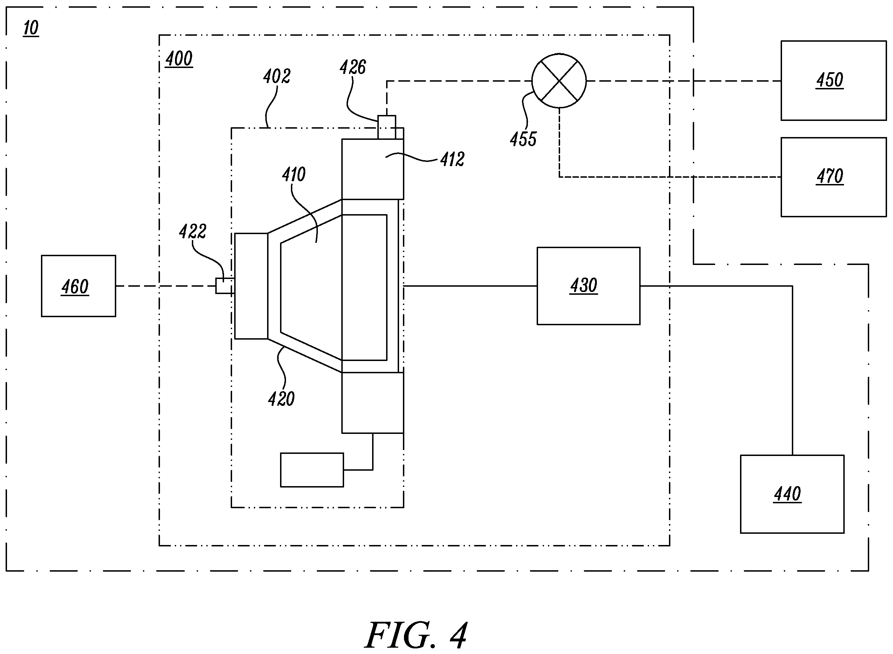

A diagram of an example blower system 400 for providing air to an airframe system is shown schematically in Figure 4. The blower system 400 comprises a blower compressor assembly 402 including a rotary machine (in particular a turbomachine) comprising a rotor 410 which is configured to be mechanically coupled to a spool 440 of a gas turbine engine. The spool may, for example, be the high-pressure (HP) spool of a two- or three- shaft gas turbine or an intermediate pressure (IP) spool of a three-spool engine, though any one or more spools of a gas turbine engine may be coupled to the rotor. The rotor 410 is disposed within a rotor housing 420. In the example of Figure 4, the blower system 400 comprises a variable transmission 430 for mechanically coupling the rotor 410 to the spool 440. As described in greater detailed below, the blower compressor assembly 402 is moveable between a compressor configuration and a turbine configuration by relative movement between the rotor 410 and a flow modifier 412 of the blower compressor assembly 402.

In the compressor configuration, the rotor 410 is configured to be driven to rotate by the spool 440, whereby the blower compressor assembly 402 compresses air it receives from the gas turbine engine. The compressed air is discharged to an airframe discharge nozzle 426 for supply to an airframe system 450 for an airframe pressurisation purpose. The airframe pressurisation purpose may be, for example, wing anti-icing, fuel tank inerting, cargo bay smoke eradication and/or aircraft cabin pressurisation. In the example of Figure 4, the rotor 410 is configured to receive air from the gas turbine engine via an engine bleed nozzle 422 (as also shown on Figure 1). The engine bleed nozzle 422 is in fluid communication with an air pathway (shown schematically at 460) of the gas turbine engine. Accordingly, in the compressor configuration, the blower system 400 is configured to draw air from the air pathway 460 of the gas turbine engine and supply air to the airframe system 450, for example to pressurise and/or ventilate an aircraft cabin.

The blower compressor assembly 402 is configured to function as a compressor in the compressor configuration, such that air supplied to the airframe system 450 is at a higher pressure than air drawn from the air pathway 460 of the gas turbine engine. As a result, the blower system 400 is not required to draw air from a relatively high pressure region of the gas turbine engine in order to supply pressurised air to the airframe system 450. Instead, the blower system 400 may draw air via the engine bleed nozzle 422 from a relatively low pressure region of the gas turbine engine, such as from a bypass duct 22 of the gas turbine engine as shown in Figure 1. If the blower system 400 were alternatively required to draw air from a relatively high pressure region of the gas turbine engine (e.g. the high pressure compressor), an efficiency of the gas turbine engine may be reduced. Therefore, the blower system 400 provides a more efficient airframe system pressurisation and ventilation system when incorporated into an aircraft. In addition, this approach reduces a scope for contamination of the air supply to the airframe system 450.

The rotor 410 is driven to rotate in the compressor configuration by the variable transmission 430, which itself receives drive input from the spool 440, for example through an accessory gearbox of the gas turbine engine. The speed of rotation of the spool 440 depends on the operating point of the gas turbine engine, which dictates a speed of the spool 440. The variable transmission 430 allows a rotational speed of the rotor 410 in the compressor configuration to be decoupled from a rotational speed of the spool 440, so that a compression performance of the blower compressor assembly 402 in the compressor configuration is not solely governed by the operating point of the gas turbine engine (e.g. it can be controlled to operate at a target speed independent of the rotational speed of the spool, and/or at a variable speed ratio relative to the rotational speed of the spool). Inclusion of a variable transmission 430 within the blower system 400 therefore provides more versatile and adaptable means for supplying pressurised air to an airframe system. Various suitable variable transmission types will be apparent to those of ordinary skill in the art. For example, the variable transmission 430 may comprise an electric variator, as described in EP 3517436 B1.

The blower system 400 is also configured to be able to receive (e.g. configured to selectively receive) compressed air from a pressurised air source 470 to drive the spool 440 to rotate, for example for cranking the gas turbine engine in the turbine configuration. In the example of Figure 4, the blower system is configured to receive compressed air from the pressurised air source 470 via the airframe discharge nozzle 426. In addition, the blower system 400 further comprises a start control and isolation valve 455 which is configured to isolate the airframe discharge nozzle 426 from the pressurised air source 470 in the compressor configuration, and to isolate the airframe discharge nozzle 426 from the airframe system 450 in the turbine configuration. The start control and isolation valve 455 may be further configured to control a mass flow and a pressure of an air flow from the pressurised air source 470 to the airframe discharge nozzle 426 in the turbine configuration. However, it will be appreciated that the blower system 400 may otherwise be configured to receive compressed air from the pressurised air source 470, such as via an external air nozzle, for example.

The pressurised air source 470 may be derived from a system of the aircraft, for example, an auxiliary power unit (APU) of the aircraft or may be derived from ground starting equipment (GSE), e.g. separate from the aircraft. In the example of Figure 4, the blower system 400 is configured to discharge air to the engine bleed nozzle 422 in the turbine configuration. However, the blower system 400 may otherwise discharge air in the turbine configuration, such as to a dedicated auxiliary nozzle, for example. Air discharged from the blower compressor assembly 402 via a dedicated auxiliary nozzle may be used for cooling other systems and/or components of the gas turbine engine and/or the aircraft in the turbine configuration.

The blower compressor assembly 402 is configured to function as a turbine in the turbine configuration, such that the spool 440 may be driven to rotate by the rotor 410. Generally, the blower system 400 may be configured to drive rotation of the spool 440 to a rotational speed which is sufficient to enable the gas turbine engine to successfully execute an ignition process. Consequently, the blower system 400 dispenses with a need to provide a dedicated air turbine starting system or an electric starting system to the gas turbine engine, each of which are associated with additional weight and system complexity. Additionally or alternatively, the blower system 400 may be able to drive the spool 440 to rotate at a lower speed, for example to prevent the formation of a bowed engine rotor condition following engine shutdown or to reduce a bowed engine rotor condition prior to engine start. To this end, the start control and isolation valve 455 of the blower system 400 may be configured to control the mass flow and pressure of the air flow to a somewhat lower level than that required for engine starting.

The use of a two-configuration blower compressor assembly 402 allows for an assembly in which the rotor 410 rotates in the same rotation direction (i.e. clockwise or anti-clockwise) in both the compressor configuration and the turbine configuration. In this way, in the turbine configuration of the blower compressor assembly 402 the rotor 410 will drive the spool 440 to rotate in a direction that the spool 440 rotates when it drives the rotor 410 in the compressor configuration. This allows for the omission of a separate reversing mechanism to permit the spool 440 to be driven to rotate in its starting direction, which will be the same as the direction it rotates during when driving the rotor 410 in the compressor configuration. A separate reversing mechanism would result in additional mechanical efficiency losses in, and increased weight of and/or a reduced reliability of, the blower compressor assembly 402.

Figure 4 also schematically shows a gas turbine engine 10 comprising blower system 400. The gas turbine engine 10 may be in accordance with the gas turbine engine 10 described above with respect to Figure 1 and/or Figure 2.

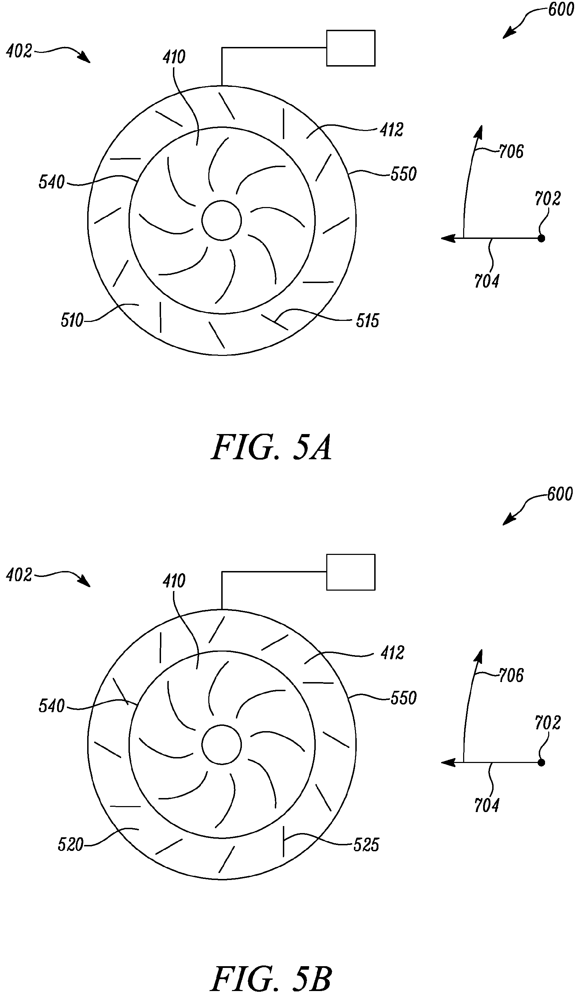

Various examples of a blower compressor assembly in accordance with the blower compressor assembly 402 described above with respect to Figure 4 will now be described with reference to Figures 5A-6D, with like reference numerals being used to indicate common features.

Figures 5A-5B show, schematically, a front or axial view of an example blower compressor assembly 402 in a compressor configuration and in a turbine configuration, respectively. The blower compressor assembly 402 comprises the rotor 410 configured to be mechanically coupled to a spool of a gas turbine engine. The blower compressor assembly 402 may be referred to according to a cylindrical co-ordinate system having an axial direction 702, a radial direction 704 and a circumferential direction 706. The axial direction 702 is defined as being coaxial with a rotational axis of the rotor 410 while the circumferential direction 706 corresponds to a direction of rotation of the rotor 410 in use. The radial direction 704 is mutually locally perpendicular to both the axial direction 702 and the circumferential direction 706.

In the example of Figures 5A-5B, the flow modifier 412 of the blower compressor assembly 402 comprises a diffuser vane array 510 comprising a plurality of diffuser vanes 515. The diffuser vanes 515 define a plurality of flow channels between them, e.g. between adjacent pairs of the diffuser vanes. The flow modifier assembly 412 further comprises a nozzle guide vane array 520 comprising a plurality of nozzle guide vanes 525. The nozzle guide vanes define a plurality of flow channels between them, e.g. between adjacent pairs of the nozzle guide vanes

In the compressor configuration, as shown in Figure 5A, the diffuser vane array 510 is disposed around the rotor 410, such that diffuser vanes, e.g. the flow channels between the diffuser vanes, are at least partially aligned, e.g. in the axial direction 702 of the blower compressor assembly, with flow channels though the rotor 410, e.g. between rotor blades of the rotor 410. In the compressor configuration, the diffuser vane array 510 is configured to act together with the rotor 410 to compress air received at the rotor 410 by converting kinetic energy of air received from the rotor 410 into static pressure energy. Conversely, in the turbine configuration, as shown in Figure 5B, the nozzle guide vane array 520 is disposed around the rotor 410, such that the nozzle guide vanes, e.g. the flow channels between the nozzle guide vanes, are at least partially aligned, e.g. in the axial direction 702 of the blower compressor assembly, with flow channels through the rotor 410, e.g. between rotor blades of the rotor 410. In the turbine configuration, the nozzle guide vane array 520 is configured to act together with the rotor 410 to expand air received at the nozzle guide vane array 520 by converting static pressure energy of air received at the nozzle guide vane array 520 into kinetic energy and to guide the air at an optimised approach angle into the rotor 410.

A geometry of each of the plurality of diffuser vanes 515 of the array may be selected so as to optimise an aerodynamic performance of the diffuser vane array 510 without compromising an aerodynamic performance of the nozzle guide vane array 520. Likewise, a geometry of each of the plurality of nozzle guide vanes 525 may be selected so as to optimise an aerodynamic performance of the nozzle guide vane array 520 without compromising an aerodynamic performance (i.e. a turbine function) of the nozzle guide vane array 520. Accordingly, an overall performance of the blower compressor assembly 402 in both the compressor configuration and the turbine configuration may be improved by providing dedicated flow modifiers for the respective modes of operation, rather than, for example, attempting to provide a single configuration through which the flow merely passes in different directions.

The geometries of each of the plurality of diffuser vanes 515 and of each of the plurality of nozzle guide vanes 525 is predetermined and fixed in use. It may be that angles of attack of each of the plurality of diffuser vanes 515 and of each of the plurality of nozzle guide vanes is predetermined and fixed in use. By providing a fixed configuration of the respective aerodynamic components, dynamic sealing losses associated with variable geometry and/or rotatable vanes may be eliminated or reduced, and the overall performance of the blower compressor assembly 402 may be improved in the compressor configuration and/or the turbine configuration relative to alternative blower assemblies having such features.

The example blower compressor assembly 402 further comprises an actuator assembly 600 configured to cause relative movement between the rotor 410 and the flow modifier 412 so that the diffuser vane array 510 is disposed around the rotor 410 for operating in the compressor configuration or so that the nozzle guide vane array is disposed around the rotor 410 for operating in the turbine configuration.

The actuator assembly 600 is further configured to adjust an effective axial height of the diffuser vanes 515, the effective axial height of the diffuser vanes 515 being defined with respect to a rotational axis of the rotor 410, thereby adjusting a flow area of the diffuser vane array in fluidic communication with the flow channels though the rotor. Accordingly, in the compressor configuration, a compression performance of the blower compressor assembly 402 may be adjusted to meet a compression demand associated with, for example, an airframe system.

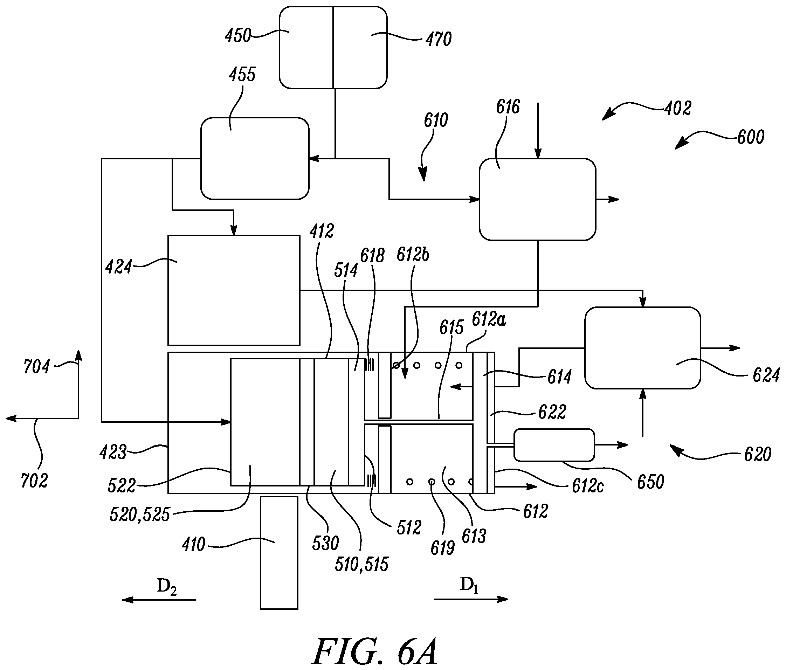

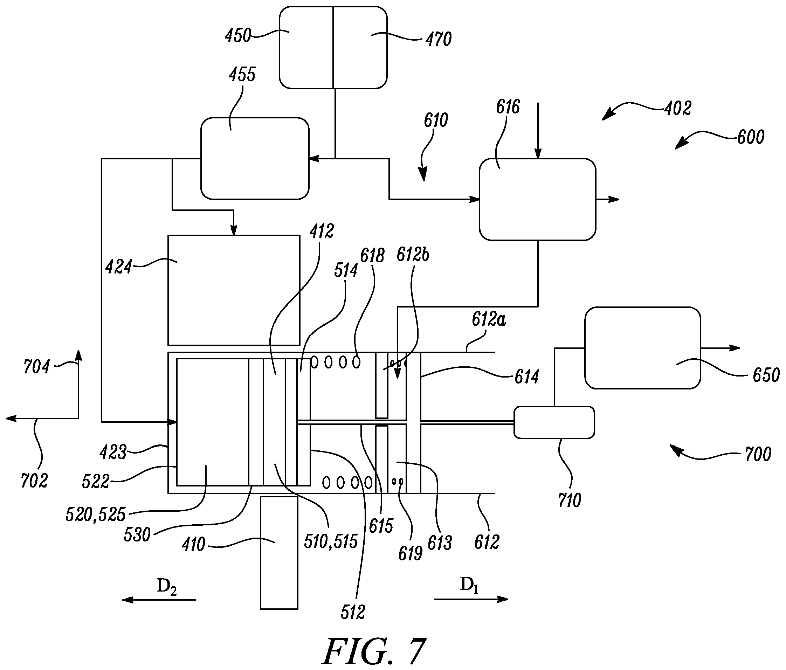

To this end, an example actuator assembly 600 is described below with reference to Figures 6A-6C and 7, with like reference numerals being used to indicate common features.

Referring now to Figures 6A-6c and 7, the flow modifier 412 comprises the diffuser vane array 510 and the nozzle guide vane array 520 which may be arranged opposite sides of a central plate 530, e.g. in the axial direction 702 of the blower compressor assembly. The central plate 530 may thereby form an axial end wall for the flow channels defined by the diffuser vanes and the nozzle guide vanes on either side of the central plate.

The flow modifier 412 further comprises a nozzle guide vane end plate 522 spaced apart from the central plate in the axial direction of the blower compressor assembly. The plurality of nozzle guide vanes 525 may be arranged between, e.g. axially between, the central plate 530 and the nozzle guide vane end plate 522. The plurality of flow channels through the nozzle guide vane array may thereby be defined between the plurality of nozzle guide vanes, e.g. in the radial and circumferential directions 704, 706, and between the central plate 530 and the nozzle guide vane end plate 522, e.g. in the axial direction.

In the arrangement depicted, the nozzle guide vanes 525 are fixedly coupled to the central plate 530 and the nozzle guide vane end plate 522 at opposite axial ends of the nozzle guide vanes. However, in other arrangements, the nozzle guide vanes may be movably, e.g. pivotally, coupled to the central plate and the nozzle guide vane end plate, e.g. in order to allow an angle of attack of the nozzle guide vanes to be adjusted.

The flow modifier 412 further comprises a diffuser vane end plate 512 spaced apart from the central plate 530 in the axial direction 702 of the blower compressor assembly. The diffuser vane end plate 512 is arranged on an opposite side of the central plate 530 from the nozzle guide vane end plate 522. The plurality of diffuser vanes 515 may be arranged between, e.g. axially between, the central plate 530 and the diffuser vane end plate 512. For example, the diffuser vanes may be fixedly coupled to the central plate and the diffuser vane end plate at opposite axial ends of the diffuser vanes. Alternatively, the diffuser vanes 515 may be movably, e.g. pivotally, coupled to the central plate and the diffuser vane end plate in order to enable angles of attack of the diffuser vanes to be varied.

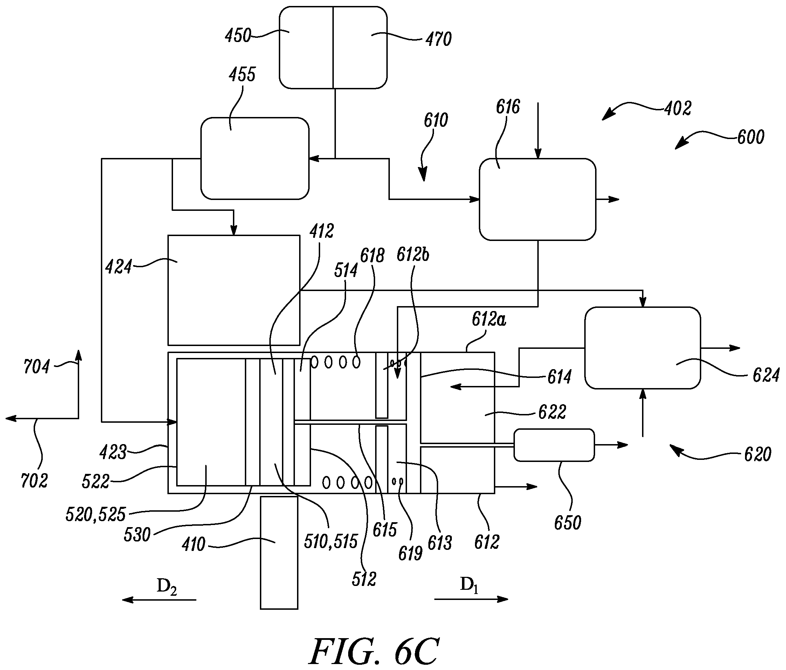

The flow modifier 412 further comprises a movable diffuser plate 514. The movable diffuser plate may be arranged between, e.g. axially between, the central plate 530 and the diffuser vane end plate 512. The plurality of diffuser vanes may pass through openings in the movable diffuser plate 514 to extend between the central plate 530 and the diffuser vane end plate 512. The plurality of flow channels through the diffuser vane array 510 may be defined between the plurality of diffuser vanes 515, e.g. in the radial and circumferential directions, and between the central plate 530 and the movable diffuser plate 514, e.g. in the axial direction. The movable diffuser plate 514 may be movable relative to the central plate 530 (as shown in Figures 6C and 6D), e.g. in the axial direction, in order to allow the effective axial height of the diffuser vane array, and hence the flow area of the flow channels through the diffuser vane array, to be varied.

Referring now in particular to Figure 6A, Figure 6A schematically illustrates the blower compressor assembly 402 comprising the rotor 410, the flow modifier 412 and the actuator assembly 600.

The actuator assembly 600 comprises a first actuator 610 configured to selectively move the flow modifier 412, e.g. in an axial direction of the rotor, such that the nozzle guide vane array 520 is arranged about the rotor 410 in fluidic communication with the flow channels through the rotor, e.g. such that the blower compressor assembly is in the turbine configuration. The actuator assembly 600 further comprises a second actuator 620 configured to controllably adjust the effective axial height of the diffuser vanes, e.g. to thereby controllably adjust the flow area of the diffuser vane array in fluidic communication with the flow channels though the rotor, when the blower compressor assembly 402 is in the compressor configuration. Further, the first actuator, and/or the second actuator may be configured to selectively move the flow modifier assembly 412, e.g. in an axial direction of the rotor, such that the diffuser vane array is arranged about the rotor in fluidic communication with the flow channels through the rotor, e.g. such that the blower compressor assembly is in the turbine compressor.

The first actuator 610 comprises a piston 614 arranged within a cylinder 612 of the actuator assembly 600. The cylinder 612 comprises an outer wall 612a extending around a periphery of the cylinder and a first axial end wall 612b configured to close the cylinder at a first axial end, The piston 614 may be arranged to move axially within the cylinder (which may be aligned with the axial direction of the blower compressor assembly) based on a pressure of air within a first chamber 613 of the first actuator. The first chamber 613 may comprise a portion of the cylinder to one side of the piston 614, e.g. between the piston and the first axial end wall 612b. The piston 614 may move based on a pressure difference between the pressure of air within the first chamber 613 and a pressure of air on an opposite side of the piston from the first chamber 613, e.g. within a second chamber 622 (described below).

The first actuator 610 further comprises a first valve 616 configured to selectively supply pressurised air, e.g. from the pressurised air source 470, such as the pressurised air source on the aircraft, to the first chamber 613, or vent the first chamber, e.g. to atmosphere. In other words, the first valve 616 may be a two-state control valve, such as a solenoid valve. When pressurised air is supplied to the first chamber 613, the piston may be urged to move in a first direction D₁.

The piston 614 is coupled to the flow modifier 412, e.g. via a rod 615, such that the flow modifier is caused, or is able, to move together with the piston 614. For example, as depicted in Figure 6A, the piston may be coupled to the movable diffuser plate 514. When the movable diffuser plate is moved in the first direction D₁, the movable diffuser plate 514 may engage the diffuser vane end plate 512 and urge the flow modifier to move in the first direction. Accordingly, when the first valve 616 is controlled to supply pressurised air to the first chamber 613, the piston 614 may move in the first direction and cause the flow modifier to move in the first direction, which may be towards the turbine configuration of the blower compressor assembly.

The flow modifier 412 may be biased to move toward in a second direction D₂, opposite the first direction D₁. For example, the actuator assembly 600 may comprise a first resilient element 618, which may be arranged between the flow modifier 412 and the first axial end wall 612b of the cylinder, e.g. outside the first chamber 613. Accordingly, when the first chamber is vented, e.g. by the first valve being controlled to vent the first chamber, the piston 614 may no longer be urged to move in the first direction D₁ and the flow modifier (and piston) may move in the second direction D₂, e.g. under the action of the first bias. The flow modifier 412 may therefore be moved towards the compressor configuration of the blower compressor.

In the arrangement depicted in Figure 6A, the first valve 616 is supplying pressurised air from the pressurised air source to the first chamber 613. The piston, and hence the flow modifier, has therefore moved in the first direction D₁ so that the nozzle guide vane array 520 is aligned with the rotor 410, e.g. such that the blower compressor assembly is in the turbine configuration.

The second actuator 620 may comprise a second chamber 622 provided on an opposite side of the piston 614 from the first chamber 613. The second chamber 622 may comprise a portion of the cylinder 612. The cylinder may comprise a second axial end wall and the second chamber may comprise the portion of the cylinder between the piston and the second axial end wall 612c.

The actuator assembly 600 may further comprise a second valve 624 for controllably adjusting a pressure of air within the second chamber 622. As depicted, the second valve 624 may be fluidically coupled to an air outlet of the blower compressor assembly, e.g. to an outlet volute 424 or the airframe discharge nozzle 426 of the blower compressor assembly. The second valve 624 may be controllable to vary, e.g. modulate, a pressure within the second chamber 622 between an outlet pressure of the blower compressor assembly 402 and a vent pressure, e.g. atmospheric pressure. The second valve 624 may be an electro-pneumatic servovalve, e.g. a fully modulating electro-pneumatic servovalve.

In the arrangement shown in Figure 6A, the second valve 624 is being controlled such that the pressure within the second chamber 622 is the vent pressure, in other words the second chamber 622 is being vented via the second valve 624. Accordingly, a pressure in the second chamber is less than the pressure in the first chamber, causing the piston to move in the first direction D₁, as described above.

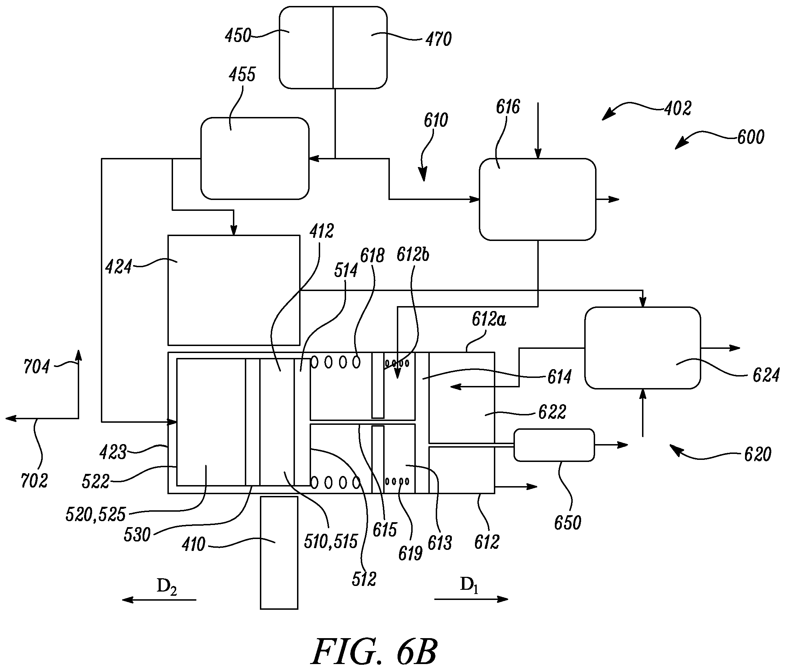

In the arrangement shown in Figure 6B, the first valve 616 is being controlled to vent the first chamber 613. In this arrangement, the second valve 624 may be controlled to supply pressurised air to the second chamber 622 at a pressure between the outlet pressure of the blower compressor assembly and the vent pressure, or may be controlled to vent the second chamber. Accordingly, the flow modifier 412 has moved, e.g. in the second direction D₂, into the compressor configuration. As described above, the piston 614 may be coupled to the movable diffuser plate. Movement of the piston on the first direction D₁ may therefore move the movable diffuser plate, e.g. so that the movable diffuser plate no longer engages the diffuser vane end plate, and permit the flow modifier to move in the first direction, e.g. under the action of the first bias. Similarly, the flow modifier may be urged to move the first direction, e.g. under the action of the first bias, and engagement between the diffuser vane end plate and the movable diffuser plate may urge the piston to move in the first direction.

The actuator assembly 600 may be further configured to bias the movable diffuser plate 514 towards the diffuser vane end plate 512, e.g. such that the flow area through the flow channels defined by the diffuser vane array is at a maximum. In particular, the actuator assembly 600 may comprise a second resilient element 619 arranged between the first axial end wall 612b of the cylinder and the piston 614. The second resilient element 619 may thereby act to bias the piston in the first direction D₁, so that the movable diffuser plate is biased towards the diffuser vane end plate.

A spring constant of the second resilient element 619 may be less than a spring constant of the first resilient element 618. Accordingly, a bias force acting to bias the movable diffuser plate 514 towards the diffuser vane end plate 512 may be less than a bias force acting to bias the flow modifier 412 towards the compressor configuration.

The blower compressor assembly 402 may comprise a movement stop 423 configured to restrict, e.g. limit, movement of the flow modifier 412 in the second direction D₂. For example, the flow modifier 412 may be arranged within a flow modifier housing or the rotor housing 420, and a wall of the housing may form the movement stop preventing further movement of the flow modifier in the second direction, e.g. beyond the position in which the diffuser vane array 510 is aligned with the rotor 410.

As shown in Figure 6C, when pressurised air is supplied to the second chamber 622, e.g. via the second valve 624, and optionally when the first chamber 613 is vented by the first valve 616, the piston 614 may be urged to move in the second direction D₂ due to the pressure difference.

When the flow modifier 412 is contacting the movement stop, the flow modifier may not move further in the second direction D₂, e.g. under the action of the first bias and/or due to the pressure difference between the first and second chambers. Hence when the piston 614 is urged to move further in the second direction D₂, due to the pressurised air being introduced into the second chamber 622, the movable diffuser plate 514 may be moved, e.g. against the action of the second bias, in the second direction. In particular, the movable diffuser plate 514 may be moved towards the central plate 530 of the flow modifier 412, thereby adjusting an effective height and flow area of the flow channels through the diffuser. The actuator assembly 600 may be thereby configured such that increasing the pressure supplied to the second chamber reduces the flow area of the flow channels through the diffuser.

As pressurised air may be supplied to the second chamber 622 from the air outlet of the blower compressor assembly 402, e.g. via the second valve 624, a pressure of air within the flow channels through the diffuser may be similar to a pressure of air supplied to the second chamber, e.g. a maximum pressure of air that may be supplied to the second chamber via the second valve. Accordingly, an area of the piston 614 exposed to the second chamber 622, e.g. perpendicular to the first direction, may be greater than an area of the movable diffuser plate 514 exposed to the air within the flow channels through the diffuser array, e.g. perpendicular to the first direction.

When the second valve 624 is controlled to reduce a pressure in the second chamber 622, e.g. to vent the second chamber, the piston 614 may move in the first direction under the action of the second bias, which may in turn move the movable diffuser plate 514 in the first direction D₁ and return the movable diffuser plate to a position in which the flow area of the flow channels through the diffuser are at a maximum.

Referring now to Figure 7, as an alternative to the second actuator 620 described above with reference to Figure 6A to 6C, the actuator assembly 600 may comprise a second actuator 700 according to anther arrangement of the present disclosure. The second actuator 700 may comprise an electromechanical actuator 710 coupled to the piston 614 and configured to controllably adjust the position of the piston 614. When the flow modifier 412 is contacting the movement stop 423, moving the piston 614 in the second direction D2 may cause the movable diffuser plate 514 to move relative to the diffuser vane end plate 512 in the second direction D₂, thereby adjusting a flow area through the flow channels of the diffuser. In this way, the electromechanical actuator 710 may control the effective height and flow area of the flow channels through the diffuser vanes.

The electromechanical actuator 710 may be configured to be driven, e.g. by the piston 614, in the first direction D₁ and optionally, the second direction D₂. In this way, when the electromechanical actuator 710 is not being controlled to adjust the position of the piston 614, then the position of the piston may be controlled based on the pressure of air within the first chamber, as described above. Additionally, the position of the piston 614 may be determined by the action of the first and/or second biases. AS illustrated in Figure 7, when the second actuator comprises the electromechanical actuator 710, the cylinder 612 may not comprise the second axial end wall 612c. Hence, a pressure on the opposite side of the piston 614 from the first chamber 613 may be atmospheric pressure, which may be the vent pressure.

In any of the arrangements described above with reference to Figures 6A to 6C and 7, the actuator assembly 600 may further comprise a controller 650, configured to determine the position of the piston 614, and hence, the movable diffuser plate 514, and therefore the flow area through the diffuser vanes. In the arrangement depicted in Figures 6A-6C, the controller 650 may comprise a pressure sensor configured to measure the pressure of air within the second chamber 622 and determine the position of the piston 614 and/or the movable diffuser plate 514 based on the pressure within the second chamber. In the arrangement depicted in Figure 7, the controller may be configured to receive a signal from the electromechanical actuator 652 providing an indication of the position of the piston and/or the movable diffuser plate 514.

The controller 650 may be configured to provide the indication of the position of the piston and/or the movable diffuser plate 514, an effective height or flow area through the diffuser, and/or a pressure output of the blower compressor assembly derived from the measurements received by the controller 650 to an electronic controller of the engine, such as an electronic engine controller, or the aircraft. In some arrangements, the controller 650 may be part of, e.g. a module of, the electronic controller of the engine or aircraft.

It will be understood that the invention is not limited to the embodiments above-described and various modifications and improvements can be made without departing from the scope of the invention, which is solely defined by the appended claims.

## Claims

1. A blower compressor assembly (402) comprising:
a flow modifier (412) comprising an array of nozzle guide vanes (525) and an array of diffuser vanes (515), wherein the flow modifier is movable relative to a rotor (410) between a turbine configuration, in which the array of nozzle guide vanes is arranged about the rotor in fluidic communication with one or more flow channels through the rotor, and a compressor configuration, in which the array of diffuser vanes is arranged about the rotor in fluidic communication with the flow channels through the rotor; and
an actuator assembly (600) for moving the flow modifier (412) relative to the rotor (410) between the turbine configuration and the compressor configuration, wherein the actuator assembly comprises:
a first actuator (610) comprising a first chamber (613), a first valve (616) configured to selectively supply pressurised air from a pressurised air source (470) to the first chamber or vent pressurised air from the first chamber, and a piston (614) arranged to one side of the first chamber and coupled to the flow modifier such that the flow modifier is moved into the turbine configuration or the compressor configuration based on the pressure of air within the first chamber; and
a second actuator (620, 700), configured to controllably adjust the position of the piston (614) when the blower compressor is in the compressor configuration, in order to adjust a flow area of the diffuser vane array (515) in fluidic communication with the flow channels through the rotor (410).

2. The blower compressor assembly (402) of claim 1 further comprising the rotor (410) defining the one or more flow channels therethrough.

3. The blower compressor assembly (402) of claim 1 or 2, wherein the second actuator (620) comprises a second chamber (622), provided on an opposite side of the piston (614) from the first chamber (613), and a second valve (624) configured to controllably supply pressurised air to the second chamber in order to adjust the position of the piston.

4. The blower compressor assembly (402) of claim 3, wherein the second valve (624) is a variable pressure valve configured to controllably modulate the pressure of air supplied to the second chamber (622), in order to selectively vary a flow area of the diffuser vane array (515) in fluidic communication with the flow channels through the rotor (410).

5. The blower compressor assembly (402) of claim 3 or 4, wherein the second valve (624) is arranged to receive a supply of pressurised air from an outlet of the blower compressor, to selectively supply to the second chamber (622).

6. The blower compressor assembly (402) of claim 1 or 2, wherein the second actuator (700) comprises an electro-mechanical actuator coupled to the piston (614) and configured to controllably adjust the position of the piston, in order to selectively vary a flow area of the diffuser vane array (515) in fluidic communication with the flow channels through the rotor (410), and optionally wherein the electro-mechanical actuator is configured to be driven by the piston (614) to enable the vane array to move into the turbine configuration when pressurised air is supplied to the first chamber (613).

7. The blower compressor assembly (402) of any of the preceding claims, wherein the first valve (616) comprises a 2-way valve configured to either supply pressurised air to the first chamber (613) or vent the first chamber (613), and/or wherein the first valve (616) is configured to vent air from the first chamber (613) when the blower compressor assembly (402) is in the compressor configuration.

8. The blower compressor assembly (402) of any of the preceding claims, wherein the flow modifier (412) is biased towards the compressor configuration, and/or wherein the first actuator (610) is configured to move the flow modifier (412) into the turbine configuration when pressurised air is supplied to the first chamber (613).

9. The blower compressor assembly (402) of any of the preceding claims, wherein the flow modifier (412) comprises a movable plate (514), wherein the movable plate is movable relative to the array of diffuser vanes (515) in order to adjust a flow area through the diffuser, wherein the movable plate is coupled to the piston (614), and wherein the flow area though the diffuser is thereby selectively varied by the second actuator (620, 700).

10. The blower compressor assembly (402) of any of the preceding claims, wherein the piston (614) is biased to move towards a position in which a flow area through the diffuser vane array (510) is at a maximum.

11. The blower compressor assembly (402) of claim 10 when depending on claim 8, wherein a bias force configured to bias the piston (614) to move towards the position in which a flow area through the diffuser is at a maximum is less than a bias force configured to move the flow modifier (412) into the compressor configuration.

12. An actuator assembly (600) for the blower compressor assembly (402) of any of the preceding claims, the actuator assembly (600) for moving the flow modifier (412) relative to the rotor (410) between the turbine configuration and the compressor configuration, wherein the actuator assembly (600) comprises:
a first actuator (610) comprising a first chamber (613), a first valve (616) configured to selectively supply pressurised air from a pressurised air source (470) to the first chamber or vent pressurised air from the first chamber, and a piston (614) arranged to one side of the first chamber and coupled to the flow modifier (412) such that the flow modifier is moved into the turbine configuration or the diffuser configuration based on the pressure of air within the first chamber (613); and
a second actuator (620, 700), configured to controllably adjust the position of the piston (614) when the blower-compressor is in the compressor configuration, in order to adjust a flow area of the diffuser vane array (515) in fluidic communication with the flow channels through the rotor (410).

13. A gas turbine engine (10) for an aircraft, the gas turbine engine comprising the blower compressor assembly (402) of any one of claims 1 to 11 or the actuator assembly (600) of claim 12.

14. The gas turbine engine (10) of claim 13, further comprising:
an engine core (11) comprising a turbine (19), a compressor (14), and a core shaft (26) connecting the turbine to the compressor;
a fan (23) located upstream of the engine core, the fan comprising a plurality of fan blades; and
a gearbox (30) that receives an input from the core shaft (26) and outputs drive to the fan so as to drive the fan at a lower rotational speed than the core shaft, and optionally wherein:
the turbine is a first turbine (19), the compressor is a first compressor (14), and the core shaft is a first core shaft (26);
the engine core further comprises a second turbine (17), a second compressor (15), and a second core shaft (27) connecting the second turbine to the second compressor; and
the second turbine, second compressor, and second core shaft are arranged to rotate at a higher rotational speed than the first core shaft.

15. An aircraft comprising:
a blower compressor assembly (402) according to any one of claims 1 to 11, an actuator assembly (600) according to claim 12 or a gas turbine engine (10) according to any of claims 13 to 14, and optionally wherein the aircraft further comprises the pressurised air source (470).

## Patentansprüche

1. Gebläseverdichteranordnung (402), umfassend:
einen Flussmodifikator (412), umfassend ein Array von Düsenleitschaufeln (525) und ein Array von Diffusorschaufeln (515), wobei der Flussmodifikator relativ zu einem Rotor (410) zwischen einer Turbinenkonfiguration, in der das Array von Düsenleitschaufeln um den Rotor in Fluidkommunikation mit einem oder mehreren Flusskanälen durch den Rotor angeordnet ist, und einer Verdichterkonfiguration, in der das Array von Diffusorschaufeln um den Rotor in Fluidkommunikation mit den Flusskanälen durch den Rotor angeordnet ist, bewegbar ist; und
eine Aktoranordnung (600) zum Bewegen des Flussmodifikators (412) relativ zu dem Rotor (410) zwischen der Turbinenkonfiguration und der Verdichterkonfiguration, wobei die Aktoranordnung Folgendes umfasst:
einen ersten Aktor (610), umfassend eine erste Kammer (613), ein erstes Ventil (616), das dazu konfiguriert ist, selektiv der ersten Kammer Druckluft aus einer Druckluftquelle (470) zuzuführen oder Druckluft aus der ersten Kammer zu entlüften, und einen Kolben (614), der an einer Seite der ersten Kammer angeordnet und an den Flussmodifikator gekoppelt ist, sodass der Flussmodifikator in die Turbinenkonfiguration oder die Verdichterkonfiguration basierend auf dem Luftdruck innerhalb der ersten Kammer bewegt wird; und
einen zweiten Aktor (620, 700), der dazu konfiguriert ist, die Position des Kolbens (614) steuerbar einzustellen, wenn der Gebläseverdichter in der Verdichterkonfiguration ist, um einen Flussbereich des Diffusorschaufelarrays (515) in Fluidkommunikation mit den Flusskanälen durch den Rotor (410) einzustellen.

2. Gebläseverdichteranordnung (402) nach Anspruch 1, ferner umfassend den Rotor (410), der den einen oder die mehreren Flusskanäle dort hindurch definiert.

3. Gebläseverdichteranordnung (402) nach Anspruch 1 oder 2, wobei der zweite Aktor (620) eine zweite Kammer (622), die auf einer gegenüberliegenden Seite des Kolbens (614) von der ersten Kammer (613) bereitgestellt ist, und ein zweites Ventil (624), das dazu konfiguriert ist, der zweiten Kammer steuerbar Druckluft zuzuführen, um die Position des Kolbens einzustellen, umfasst.

4. Gebläseverdichteranordnung (402) nach Anspruch 3, wobei das zweite Ventil (624) ein variables Druckventil ist, das dazu konfiguriert ist, den Druck von Luft, die der zweiten Kammer (622) zugeführt wird, steuerbar zu modulieren, um einen Flussbereich des Diffusorschaufelarrays (515) in Fluidkommunikation mit den Flusskanälen durch den Rotor (410) selektiv zu variieren.

5. Gebläseverdichteranordnung (402) nach Anspruch 3 oder 4, wobei das zweite Ventil (624) dazu angeordnet ist, eine Zufuhr von Druckluft von einem Auslass des Gebläseverdichters zu empfangen, um sie selektiv der zweiten Kammer (622) zuzuführen.

6. Gebläseverdichteranordnung (402) nach Anspruch 1 oder 2, wobei der zweite Aktor (700) einen elektromechanischen Aktor umfasst, der an den Kolben (614) gekoppelt und dazu konfiguriert ist, die Position des Kolbens steuerbar einzustellen, um selektiv einen Flussbereich des Diffusorschaufelarrays (515) in Fluidkommunikation mit den Flusskanälen durch den Rotor (410) zu variieren, und wobei optional der elektromechanische Aktor dazu konfiguriert ist, durch den Kolben (614) angetrieben zu werden, um dem Schaufelarray zu ermöglichen, sich in die Turbinenkonfiguration zu bewegen, wenn Druckluft der ersten Kammer (613) zugeführt wird.

7. Gebläseverdichteranordnung (402) nach einem der vorhergehenden Ansprüche, wobei das erste Ventil (616) ein 2-Wege-Ventil umfasst, das dazu konfiguriert ist, entweder der ersten Kammer (613) Druckluft zuzuführen oder die erste Kammer (613) zu entlüften, und/oder wobei das erste Ventil (616) dazu konfiguriert ist, Luft aus der ersten Kammer (613) zu entlüften, wenn die Gebläseverdichteranordnung (402) in der Verdichterkonfiguration ist.

8. Gebläseverdichteranordnung (402) nach einem der vorhergehenden Ansprüche, wobei der Flussmodifikator (412) zu der Verdichterkonfiguration vorgespannt ist, und/oder wobei der erste Aktor (610) dazu konfiguriert ist, den Flussmodifikator (412) in die Turbinenkonfiguration zu bewegen, wenn Druckluft der ersten Kammer (613) zugeführt wird.

9. Gebläseverdichteranordnung (402) nach einem der vorhergehenden Ansprüche, wobei der Flussmodifikator (412) eine bewegbare Platte (514) umfasst, wobei die bewegbare Platte relativ zu dem Array von Diffusorschaufeln (515) bewegbar ist, um einen Flussbereich durch den Diffusor einzustellen, wobei die bewegbare Platte an den Kolben (614) gekoppelt ist und wobei der Flussbereich durch den Diffusor dadurch selektiv durch den zweiten Aktor (620, 700) variiert wird.

10. Gebläseverdichteranordnung (402) nach einem der vorhergehenden Ansprüche, wobei der Kolben (614) vorgespannt ist, um sich zu einer Position zu bewegen, in der ein Flussbereich durch das Diffusorschaufelarray (510) an einem Maximum ist.

11. Gebläseverdichteranordnung (402) nach Anspruch 10, wenn abhängig von Anspruch 8, wobei eine Vorspannkraft, die dazu konfiguriert ist, den Kolben (614) vorzuspannen, um sich zu der Position zu bewegen, in der ein Flussbereich durch den Diffusor bei einem Maximum ist, weniger als eine Vorspannkraft ist, die dazu konfiguriert ist, den Flussmodifikator (412) in die Verdichterkonfiguration zu bewegen.

12. Aktoranordnung (600) für die Gebläseverdichteranordnung (402) nach einem der vorhergehenden Ansprüche, wobei die Aktoranordnung (600) zum Bewegen des Flussmodifikators (412) relativ zu dem Rotor (410) zwischen der Turbinenkonfiguration und der Verdichterkonfiguration ist, wobei die Aktoranordnung (600) Folgendes umfasst:
einen ersten Aktor (610), umfassend eine erste Kammer (613), ein erstes Ventil (616), das dazu konfiguriert ist, selektiv Druckluft aus einer Druckluftquelle (470) der ersten Kammer zuzuführen oder Druckluft aus der ersten Kammer zu entlüften, und einen Kolben (614), der an einer Seite der ersten Kammer angeordnet und an den Flussmodifikator (412) gekoppelt ist, sodass der Flussmodifikator in die Turbinenkonfiguration oder die Verdichterkonfiguration basierend auf dem Luftdruck innerhalb der ersten Kammer (613) bewegt wird; und
einen zweiten Aktor (620, 700), der dazu konfiguriert ist, die Position des Kolbens (614) steuerbar einzustellen, wenn der Gebläseverdichter in der Verdichterkonfiguration ist, um einen Flussbereich des Diffusorschaufelarrays (515) in Fluidkommunikation mit den Flusskanälen durch den Rotor (410) einzustellen.

13. Gasturbinentriebwerk (10) für ein Luftfahrzeug, wobei das Gasturbinentriebwerk die Gebläseverdichteranordnung (402) nach einem der Ansprüche 1 bis 11 oder die Aktoranordnung (600) nach Anspruch 12 umfasst.

14. Gasturbinentriebwerk (10) nach Anspruch 13, ferner umfassend:
einen Triebwerkskern (11), umfassend eine Turbine (19), einen Verdichter (14) und eine Kernwelle (26), welche die Turbine mit dem Verdichter verbindet;
ein Gebläse (23), das sich stromaufwärts des Triebwerkskerns befindet, wobei das Gebläse eine Vielzahl von Gebläseschaufeln umfasst; und
ein Getriebe (30), das eine Eingabe von der Kernwelle (26) empfängt und Antrieb an das Gebläse ausgibt, um das Gebläse mit einer niedrigeren Drehzahl als die Kernwelle anzutreiben, und wobei optional:
die Turbine eine erste Turbine (19) ist, der Verdichter ein erster Verdichter (14) ist und die Kernwelle eine erste Kernwelle (26) ist;
der Triebwerkskern ferner eine zweite Turbine (17), einen zweiten Verdichter (15) und eine zweite Kernwelle (27), welche die zweite Turbine mit dem zweiten Verdichter verbindet, umfasst; und
die zweite Turbine, der zweite Verdichter und die zweite Kernwelle dazu angeordnet sind, sich mit einer höheren Drehzahl als die erste Kernwelle zu drehen.

15. Luftfahrzeug, umfassend:
eine Gebläseverdichteranordnung (402) nach einem der Ansprüche 1 bis 11, eine Aktoranordnung (600) nach Anspruch 12 oder ein Gasturbinentriebwerk (10) nach einem der Ansprüche 13 bis 14, und wobei optional das Flugzeug ferner die Druckluftquelle (470) umfasst.

## Revendications

1. Ensemble compresseur de ventilateur (402) comprenant :
un modificateur d'écoulement (412) comprenant un réseau d'aubes directrices de buse (525) et un réseau d'aubes de diffuseur (515), le modificateur d'écoulement étant mobile par rapport à un rotor (410) entre une configuration de turbine, ledit réseau d'aubes directrices de buse étant agencé autour du rotor en communication fluidique avec un ou plusieurs canaux d'écoulement à travers le rotor, et une configuration de compresseur, ledit réseau d'aubes de diffuseur étant agencé autour du rotor en communication fluidique avec les canaux d'écoulement à travers le rotor ; et
un ensemble actionneur (600) destiné à déplacer le modificateur d'écoulement (412) par rapport au rotor (410) entre la configuration de turbine et la configuration de compresseur, ledit ensemble actionneur comprenant :
un premier actionneur (610) comprenant une première chambre (613), une première soupape (616) conçue pour fournir sélectivement de l'air sous pression à partir d'une source d'air sous pression (470) à la première chambre ou de l'air sous pression de ventilation provenant de la première chambre, et un piston (614) agencé d'un côté de la première chambre et couplé au modificateur d'écoulement de sorte que le modificateur d'écoulement soit déplacé dans la configuration de turbine ou la configuration de compresseur sur la base de la pression d'air à l'intérieur de la première chambre ; et
un second actionneur (620, 700), conçu pour régler de manière commandable la position du piston (614) lorsque le compresseur de ventilateur est dans la configuration de compresseur, afin de régler une zone d'écoulement du réseau d'aubes de diffuseur (515) en communication fluidique avec les canaux d'écoulement à travers le rotor (410).

2. Ensemble compresseur de ventilateur (402) de la revendication 1, comprenant en outre le rotor (410) définissant le ou les canaux d'écoulement à travers celui-ci.

3. Ensemble compresseur de ventilateur (402) de la revendication 1 ou 2, ledit second actionneur (620) comprenant une seconde chambre (622), prévue sur un côté opposé du piston (614) par rapport à la première chambre (613), et une seconde soupape (624) conçue pour fournir de manière commandable de l'air sous pression à la seconde chambre afin de régler la position du piston.

4. Ensemble compresseur de ventilateur (402) de la revendication 3, ladite seconde soupape (624) étant une soupape à pression variable conçue pour moduler de manière commandable la pression de l'air fourni à la seconde chambre (622), afin de faire varier sélectivement une zone d'écoulement du réseau d'aubes de diffuseur (515) en communication fluidique avec les canaux d'écoulement à travers le rotor (410).

5. Ensemble compresseur de ventilateur (402) de la revendication 3 ou 4, ladite seconde soupape (624) étant agencée pour recevoir une alimentation en air sous pression en provenance d'une sortie du compresseur de ventilateur, pour alimenter sélectivement la seconde chambre (622).

6. Ensemble compresseur de ventilateur (402) de la revendication 1 ou 2, ledit second actionneur (700) comprenant un actionneur électromécanique couplé au piston (614) et conçu pour régler de manière commandable la position du piston, afin de faire varier sélectivement une zone d'écoulement du réseau d'aubes de diffuseur (515) en communication fluidique avec les canaux d'écoulement à travers le rotor (410), et éventuellement ledit actionneur électromécanique étant conçu pour être entraîné par le piston (614) pour permettre au réseau d'aubes de se déplacer dans la configuration de turbine lorsque de l'air sous pression est fourni à la première chambre (613).

7. Ensemble compresseur de ventilateur (402) de l'une quelconque des revendications précédentes, ladite première soupape (616) comprenant une soupape à 2 voies conçue pour fournir de l'air sous pression à la première chambre (613) ou pour ventiler la première chambre (613), et/ou ladite première soupape (616) étant conçue pour ventiler l'air de la première chambre (613) lorsque l'ensemble compresseur de ventilateur (402) est dans la configuration de compresseur.

8. Ensemble compresseur de ventilateur (402) de l'une quelconque des revendications précédentes, ledit modificateur d'écoulement (412) étant sollicité vers la configuration de compresseur, et/ou ledit premier actionneur (610) étant conçu pour déplacer le modificateur d'écoulement (412) dans la configuration de turbine lorsque de l'air sous pression est fourni à la première chambre (613).

9. Ensemble compresseur de ventilateur (402) de l'une quelconque des revendications précédentes, ledit modificateur d'écoulement (412) comprenant une plaque mobile (514), ladite plaque mobile étant mobile par rapport au réseau d'aubes de diffuseur (515) afin de régler une zone d'écoulement à travers le diffuseur, ladite plaque mobile étant couplée au piston (614), et ladite zone d'écoulement à travers le diffuseur étant ainsi sélectivement modifiée par le second actionneur (620, 700).

10. Ensemble compresseur de ventilateur (402) de l'une quelconque des revendications précédentes, ledit piston (614) étant sollicité pour se déplacer vers une position dans laquelle une zone d'écoulement à travers le réseau d'aubes de diffuseur (510) est à un maximum.

11. Ensemble compresseur de ventilateur (402) de la revendication 10 lorsqu'elle dépend de la revendication 8, une force de sollicitation conçue pour solliciter le piston (614) afin qu'il se déplace vers la position dans laquelle une zone d'écoulement à travers le diffuseur est à un maximum étant inférieure à une force de sollicitation conçue pour déplacer le modificateur d'écoulement (412) dans la configuration de compresseur.

12. Ensemble actionneur (600) pour l'ensemble compresseur de ventilateur (402) de l'une quelconque des revendications précédentes, l'ensemble actionneur (600) étant destiné à déplacer le modificateur d'écoulement (412) par rapport au rotor (410) entre la configuration de turbine et la configuration de compresseur, ledit ensemble actionneur (600) comprenant :
un premier actionneur (610) comprenant une première chambre (613), une première soupape (616) conçue pour fournir sélectivement de l'air sous pression à partir d'une source d'air sous pression (470) à la première chambre ou de l'air sous pression de ventilation provenant de la première chambre, et un piston (614) agencé d'un côté de la première chambre et couplé au modificateur d'écoulement (412) de sorte que le modificateur d'écoulement soit déplacé dans la configuration de turbine ou la configuration de diffuseur sur la base de la pression d'air à l'intérieur de la première chambre (613) ; et
un second actionneur (620, 700), conçu pour régler de manière commandable la position du piston (614) lorsque le compresseur de ventilateur est dans la configuration de compresseur, afin de régler une zone d'écoulement du réseau d'aubes de diffuseur (515) en communication fluidique avec les canaux d'écoulement à travers le rotor (410).

13. Moteur à turbine à gaz (10) pour un aéronef, le moteur à turbine à gaz comprenant l'ensemble compresseur de ventilateur (402) de l'une quelconque des revendications 1 à 11 ou l'ensemble actionneur (600) de la revendication 12.

14. Moteur à turbine à gaz (10) de la revendication 13, comprenant en outre :
un noyau de moteur (11) comprenant une turbine (19), un compresseur (14) et un arbre de noyau (26) reliant la turbine au compresseur ;
une soufflante (23) située en amont du noyau de moteur, la soufflante comprenant une pluralité de pales de soufflante ; et
une boîte d'engrenages (30) qui reçoit une entrée en provenance de l'arbre de noyau (26) et délivre en sortie l'entraînement à la soufflante de façon à entraîner la soufflante à une vitesse de rotation inférieure à celle de l'arbre de noyau,
ladite turbine étant une première turbine (19), ledit compresseur étant un premier compresseur (14) et ledit arbre de noyau étant un premier arbre de noyau (26) ;
ledit noyau de moteur comprenant en outre une seconde turbine (17), un second compresseur (15) et un second arbre de noyau (27) reliant la seconde turbine au second compresseur ; et
ladite seconde turbine, ledit second compresseur et ledit second arbre de noyau étant agencés pour tourner à une vitesse de rotation plus haute que le premier arbre de noyau.

15. Aéronef comprenant :
un ensemble compresseur de ventilateur (402) selon l'une quelconque des revendications 1 à 11, un ensemble actionneur (600) selon la revendication 12 ou un moteur à turbine à gaz (10) selon l'une quelconque des revendications 13 à 14, et éventuellement ledit aéronef comprenant en outre la source d'air sous pression (470).
